# EUROPEAN PATENT SPECIFICATION

(11) **EP 4 289 518 B1**
(45) Date of publication and mention of the grant of the patent: **18.03.2026**
(21) Application number: 23740411.6
(22) Date of filing: 09.01.2023
(51) Int. Cl.: B05C 5/02, H01M 4/04, H01M 10/42

(54) **DIE COATER FOR COATING CURRENT COLLECTOR OF SECONDARY BATTERY WITH ACTIVE MATERIAL**
DÜSENBESCHICHTER ZUR BESCHICHTUNG EINES SEKUNDÄRBATTERIESTROMABNEHMERS MIT AKTIVEM MATERIAL
MACHINE A ENDUIRE POUR LE REVÊTEMENT D'UN COLLECTEUR DE COURANT DE BATTERIE SECONDAIRE AVEC UN MATÉRIAU ACTIF

(30) Priority: 11.01.2022 KR 20220004219
(43) Date of publication of application: 13.12.2023
(73) Proprietor: LG Energy Solution, Ltd., Seoul 07335 (KR)
(72) Inventor: PARK, Joon Sun, Daejeon 34122 (KR); KIM, Man Hyeong, Daejeon 34122 (KR); CHOI, Min Hyuck, Daejeon 34122 (KR); KIM, Guk Tae, Daejeon 34122 (KR)
(74) Representative: Plasseraud IP
(86) International application number: PCT/KR2023/000366
(87) International publication number: WO 2023/136567

(56) References cited:
- CN-A- 108 816 565
- CN-U- 205 253 457
- CN-U- 210 138 795
- CN-U- 213 133 858
- CN-U- 213 612 390
- KR-B1- 102 316 428
- US-A1- 2011 287 171
- US-A1- 2020 136 133
- US-A1- 2020 147 638

## Description

### [Technical Field]

The present disclosure relates to a die coater capable of effectively simultaneously coating a current collector for a secondary battery with two types of different liquids.

### [Background Art]

As the technology development and the demand for mobile devices increase, the demand for secondary batteries is also rapidly increasing. Among secondary batteries, lithium secondary batteries are widely used as energy sources for various electronic products as well as various mobile devices in terms of high energy density, a high operating voltage, and excellent storage and lifetime characteristics.

A lithium secondary battery employs an electrode in which an active material layer and an insulating layer are formed on a surface of a current collector. The electrode is manufactured using a coating device such as a die coater such that both of an electrode slurry containing an active material and an insulation coating liquid containing an insulating material are applied onto the surface of the current collector to overlap a portion of a corner of an electrode mixture layer and then dried.

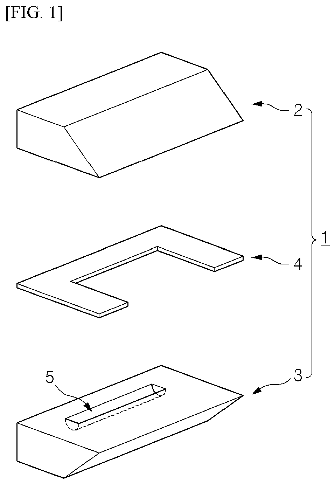

FIG. 1 shows a conventional die coater 1 for applying an electrode slurry. The die coater 1 includes an upper block 2 and a lower block 3, and a shim 4 for a die coater is interposed between the upper block 2 and the lower block 3, and the upper block 2, the lower block 3, and the shim 4 are fastened and coupled to each other using a plurality of bolt members. The lower block 3 is provided with a manifold 5 for accommodating a predetermined volume of an electrode slurry, and the manifold 5 communicates with an external electrode slurry supply part (not shown).

Here, the shim for a die coater serves to form a slit with an appropriate height between the upper block and the lower block and, simultaneously, to limit a flow direction of the electrode slurry to discharge the electrode slurry toward the slit and serves to seal between the upper block and the lower block to prevent the electrode slurry from leaking to other portions excluding the slit. The shim for a die coater is provided with guides protruding from both ends in a width direction, and a width of the electrode slurry applied onto the current collector depends on a distance between the guides.

The insulation coating liquid is applied to both sides in the width direction of the electrode slurry applied onto the current collector in the width direction. Generally, after the electrode slurry is applied onto the current collector, the insulation coating liquid is applied through an additional process using a separate device. However, it is not desirable in terms of production efficiency to coat the current collector with the electrode slurry and the insulation coating liquid through separate processes.

In order to overcome the above limitation, a technology for forming independent slits for discharging an electrode slurry and an insulation coating liquid in one die coater core has been introduced. However, when either one of the liquids of the two types of liquids leaks in the die coater, the two types of liquids (e.g., the electrode slurry and the insulation coating liquid) are mixed, or are mixed and discharged from an outlet of a slit, and thus a problem of causing a defect in quality of the current collector occurs.

US 2020/136133 discloses an electrode sheet, battery incorporating the electrode sheet, method for manufacturing the electrode sheet, method of manufacturing the battery incorporating the electrode sheet, and die head.

### [Disclosure]

### [Technical Problem]

The present disclosure is directed to providing a die coater capable of effectively simultaneously coating a current collector for a secondary battery with two types of different liquids.

However, the technical problems to be solved by the present invention are not limited to the above-described problem, and other problems not mentioned can be clearly understood by those skilled in the art from the following description of the present invention.

### [Technical Solution]

One aspect of the present invention provides a die coater capable of effectively simultaneously coating a current collector for a secondary battery with two types of different liquids as laid out in appended claim 1.

A width of the first slit may be by a width of the second coater shim.

A height of the first slit may correspond to the height of the first coater shim, and a height of the second slit may be formed to be smaller than the height of the second coater shim.

The second coater shim may be provided with a concave flow path groove which opens toward the upper block and has a bottom surface, a closed end of the flow path groove may be connected to the second liquid inlet of the upper block, and an open end of the flow path groove may form the second slit.

The first coater shim may include a base extending in a width direction and first and second guides extending to protrude from both ends of the base, and a side walls of the second coater shim may be in close contact with inner walls of the first and second guides.

A distance between a pair of the other side walls of the second coater shim may correspond to the width of the first slit.

A screw through-hole to access a bottom surface of the second coater shim is formed in the lower block, and an end portion of a bolt screw-coupled to the screw through-hole is configured to pressurize the second coater shim such that the second coater shim is in close contact with the upper block.

An expanded pressurizing block hole may be formed at an end portion of the screw through-hole in a coupling direction, and a pressurizing block accommodated in the pressurizing block hole may be interposed between the bolt and the second coater shim to pressurize the second coater shim.

The pressurizing block may pressurize portions of both side walls of the second coater shim.

The die coater may further include a third coater shim which is provided with a concave U-shaped flow path groove which opens toward the upper block and has a bottom surface, in which a closed end of the U-shaped flow path groove is connected to the second liquid inlet of the upper block and two open ends of the U-shaped flow path groove form third slits, and which has a height that is equal to the height of each of the first and second coater shims, wherein the third coater shim may be disposed between the first and second guides.

A screw through-hole to access to a bottom surface of the third coater shim may be formed in the lower block, and an end portion of a bolt screw-coupled to the screw through-hole may pressurize the third coater shim such that the third coater shim is in close contact with the upper block.

An expanded pressurizing block hole may be formed at an end portion of the screw through-hole in a coupling direction, and a pressurizing block accommodated in the pressurizing block hole may be interposed between the bolt and the third coater shim to pressurize the third coater shim.

The pressurizing block may pressurize portions of both side walls of the third coater shim.

### [Advantageous Effects]

In accordance with a die coater of the present disclosure, the die coater is formed to simultaneously discharge two different liquids, for example, an electrode slurry and an insulation coating liquid. In particular, a first slit and a second slit, which discharge the first liquid and the second liquid, respectively, can be physically separated from each other in the die coater.

In addition, since a second coater shim forming the second slit maintains airtightness using a separate pressurizing structure, internal mixing of the first liquid and the second liquid can be reliably prevented.

Therefore, in accordance with the die coater of the present disclosure, it is possible to effectively simultaneously coat a current collector with two types of different liquids.

It should be noted that effects of the present invention are not limited to the above described effect, and other effects of the present invention not mentioned above can be clearly understood by those skilled in the art from the following detailed description.

### [Description of Drawings]

However, the following drawings attached to the present specification illustrate exemplary embodiments of the present invention and serve to further assist understanding of the technical idea of the present invention together with the detailed description of the present invention, which will be described below, and thus the present invention should not be construed as being limited to details shown in the accompanying drawings.
FIG. 1 is a diagram illustrating a configuration of a die coater according to the related art.
FIG. 2 is an exploded perspective view illustrating a die coater according to one embodiment of the present invention.
FIG. 3 is a plan view illustrating the die coater through an upper block.
FIG. 4 is an enlarged front view illustrating part "A" of FIG. 3.
FIG. 5 is an enlarged front view illustrating part "B" of FIG. 3.
FIG. 6 is an exploded perspective view illustrating a die coater according to another embodiment of the present invention.
FIG. 7 is a perspective view illustrating a third coater shim included in the die coater of FIG. 6.

### [Detailed Description]

The present invention may be modified into various forms and may have a variety of embodiments, and, therefore, specific embodiments will be described in detail below.

In the present invention, the terms "comprising," "having," and the like are used to specify the presence of a feature, a number, a step, an operation, a component, an element, or a combination thereof described herein, and they do not preclude the presence or addition of one or more other features, numbers, steps, operations, components, elements, or combinations thereof.

In addition, in the present invention, when a portion of a layer, a film, a region, a plate, or the like is described as being "on" another portion, this includes not only a case in which the portion is "directly on" another portion but also a case in which still another portion is present between the portion and another portion. Conversely, when a portion of a layer, a film, a region, a plate, or the like is described as being "under" another portion, this includes not only a case in which the portion is "directly under" another portion, but also a case in which still another portion is present between the portion and another portion. In addition, in the present application, as being disposed "on" may include the case of being disposed not only on an upper portion but also on a lower portion.

Embodiment of the present invention relates to a die coater capable of effectively simultaneously coating a current collector for a secondary battery with two types of different liquids.

In one example, the die coater of an embodiment of the present invention includes an upper block provided with a second liquid inlet, a lower block coupled to the upper block and provided with a manifold which accommodates a first liquid, and coater shims interposed between the upper block and the lower block to form a first slit and a second slit which are separated from each other.

Here, the die coater of an embodiment of the present invention includes two types of the coater shims including a first coater shim and a second coater shim. The first coater shim forms the first slit which discharges the first liquid accommodated in the manifold of the lower block, and the second coater shim forms the second slit which discharges a second liquid supplied through a second liquid inlet of the upper block. In particular, the first coater shim and the second coater shim have the same height and do not vertically overlap, and thus the first and second coater shims are placed on the same surface between the upper block and the lower block.

According to the die coater of an embodiment of the present invention, the die coater is formed to simultaneously discharge two different liquids, for example, an electrode slurry and an insulation coating liquid. In particular, since the first slit and the second slit, which discharge the first liquid and the second liquid, respectively, are physically separated from each other in the die coater, an internal mixing of the first liquid and the second liquid can be prevented.

### [Modes of the Invention]

Hereinafter, some embodiments of a die coater according to the present invention will be described in detail with reference to the accompanying drawings.

### [First embodiment]

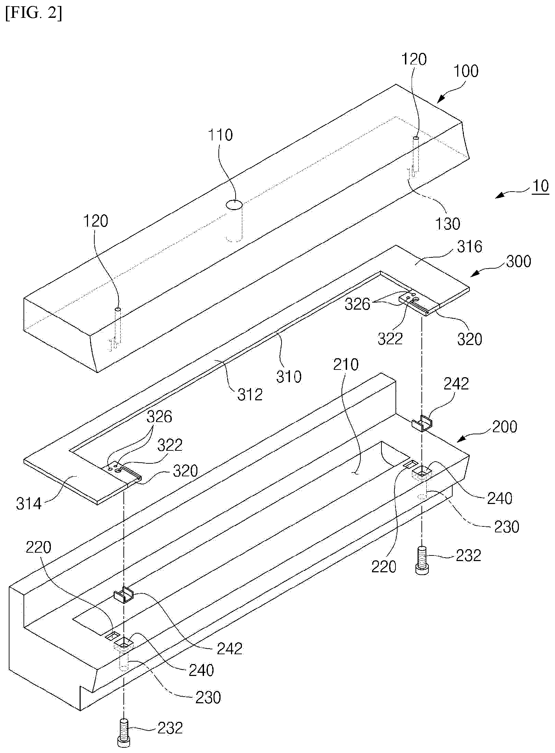

FIG. 2 is an exploded perspective view illustrating a die coater 10 according to one embodiment of the present invention. Referring to FIG. 2, the overall configuration of the die coater 10 according to an embodiment of the present invention will be described as follows.

As described above, embodiments of the present invention relates to a die coater 10 capable of effectively simultaneously coating a current collector for a secondary battery with two types of different liquids. The two types of different liquids may be, for example, an electrode slurry and an insulation coating liquid. The following description can be understood as an embodiment in which a first liquid is the electrode slurry and a second liquid is the insulation coating liquid.

The die coater 10 of embodiments of the present invention includes an upper block 100, a lower block 200, and a coater shim 300 interposed therebetween. In particular, the coater shim 300 in an embodiment of the present invention includes a first coater shim 310 and a second coater shim 320.

The upper block 100 is a part which includes a second liquid inlet 120 and occupies approximately half of a body of the die coater 10. The lower block 200 is a part which occupies the remaining half coupled to the upper block 100 and is provided with a manifold 210 which accommodates the first liquid. Here, upper and lower portions are divided on the basis of the drawings and do not limit an actual installation direction of the die coater 10.

For reference, FIG. 2 shows a first liquid inlet 110 that is formed in the upper block 100 communicating with the manifold 210 of the lower block 200, but the first liquid inlet 110 may be formed in the lower block 200. On the other hand, the second liquid inlet 120 should be formed in the upper block 100. This is because an arrangement design is limited due to a flow path groove 322 formed in the second coater shim 320 and its airtight structure, which will be described below.

The coater shim 300 is interposed between the upper block 100 and the lower block 200. The coater shim 300 is basically interposed between the upper block 100 and the lower block 200 to form a slit with a height suitable for discharging a liquid. In addition, the coater shim 300 limits a flow direction of a liquid, which flows into the die coater 10 or is accommodated in the die coater 10, to be discharged toward the slit without a backflow and also serves to seal the liquid so as not to leak to other parts excluding the slit.

In an embodiment of the present invention, the first coater shim 310 and the second coater shim 320 are included as the coater shim 300. The first coater shim 310 and the second coater shim 320 form a first slit 318 and a second slit 328 which are separated. Specifically, the first coater shim 310 forms the first slit 318 which discharges the first liquid accommodated in the manifold 210 of the lower block 200, and the second coater shim 320 forms the second slit 328 which discharges the second liquid supplied through the second liquid inlet 120 of the upper block 100.

In addition, the first coater shim 310 and the second coater shim 320 have the same height and do not overlap vertically. Therefore, the first coater shim 310 and the second coater shim 320 are placed on the same surface between the upper block 100 and the lower block 200.

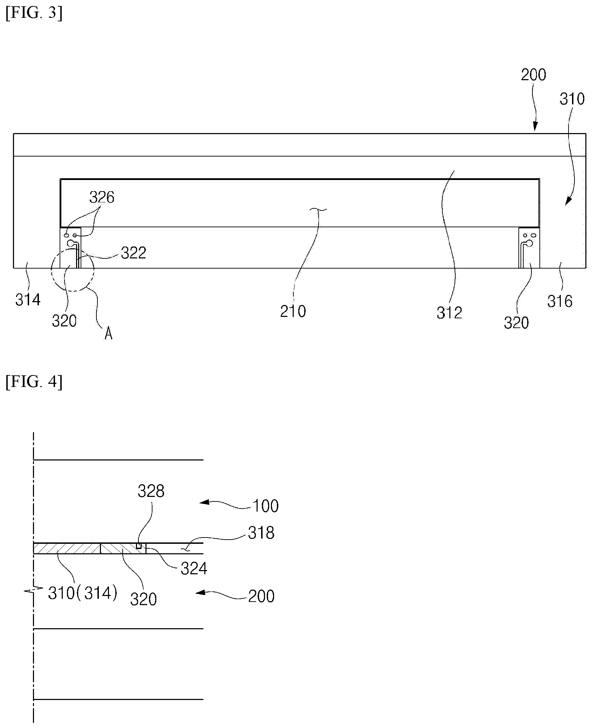

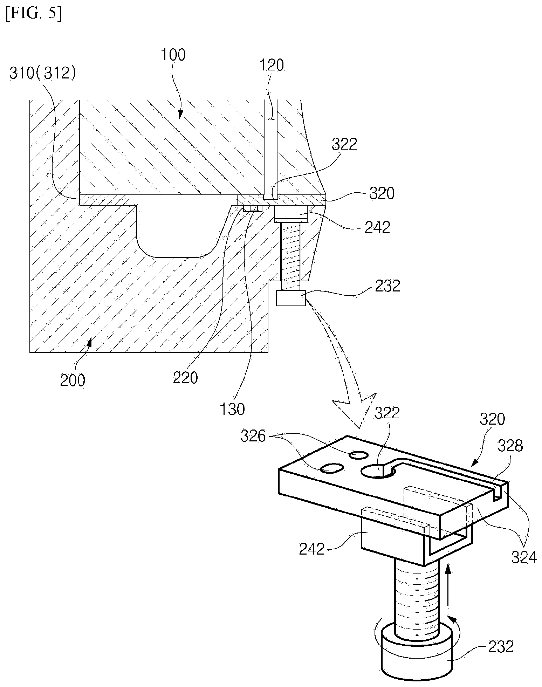

FIG. 3 is a plan view illustrating the die coater 10 without the upper block 100, and FIG. 4 is an enlarged front view illustrating part "A" of FIG. 3. Referring to FIGS. 3 and 4, the first coater shim 310 includes a base 312 extending in a width direction, and a first guide 314 and a second guide 316 which protrude to extend from both ends of the base 312. In addition, the second coater shim 320 is provided with a concave flow path groove 322 which opens toward the upper block 100 and has a bottom surface (see FIG. 5).

Here, in the first coater shim 310, a space between the first and second guides 314 and 316 forms the first slit 318, and in the second coater shim 320, an open end of the concave flow path groove 322 having the bottom surface forms the second slit 328. Since a depth of the flow path groove 322 is smaller than a thickness (height) of the second coater shim 320, as shown in FIG. 4, a height of the first slit 318 corresponds to the height of the first coater shim 310, and a height of the second slit 328 is formed to be smaller than the height of the second coater shim 320.

In addition, since the first coater shim 310 and the second coater shim 320 have the same height and are coplanar with each other without overlapping vertically, a width of the first slit 318 is limited by a width of the second coater shim 320.

For example, in the first embodiment shown in FIG. 3, a pair of one side walls 324 of the second coater shims 320 are in close contact with inner walls of the first guide 314 and the second guide 316. Therefore, a distance between a pair of the other side walls 324 of the second coater shims 320, which face each other, (side surfaces opposite to sidewalls in close contact with each other) corresponds to an actual width of the first slit 318. That is, a length obtained by subtracting the width of the second coater shim 320 from the distance between the inner walls of the first guide 314 and the second guide 316 becomes the width of the first slit 318.

As described above, looking at a structure of the second slit 328 formed by the second coater shim 320, since the first liquid of the first slit 318 is blocked by the both side walls 324 of the second coater shim 320, and a lower side of the flow path groove 322 is the bottom surface and an upper side thereof is in close contact with the upper block 100, the second coater shim 320 is structurally completely separated from the first liquid. Therefore, in the die coater 10 according to an embodiment of the present invention, a probability of mixing the two types of different liquids is significantly reduced.

In addition, according to an embodiment of the present invention, improved airtightness of the second coater shim 320 can be maintained by a pressurizing structure shown in FIG. 5. The pressurizing structure of FIG. 5 is to reinforce the airtightness between the upper block 100 and the second coater shim 320. That is, since both side surfaces and the bottom surface of the first coater shim 310 are a closed structure securing the airtightness, the airtightness of the upper surface is affected by a degree of adhesion to the upper block 100. Accordingly, the pressurizing structure of FIG. 5 is applied to bring the second coater shim 320 more firmly in close contact with the upper block 100.

Referring to FIG. 5, a closed end of the concave flow path groove 322 formed in the second coater shim 320 is connected to the second liquid inlet 120 of the upper block 100 to receive the second liquid. For reference, as shown in FIG. 2, the number and positions of second liquid inlets 120 correspond to the number and positions of second coater shims 320.

In addition, in the illustrated embodiment, an installation position of the second coater shim 320 is accurately set by a pin member 130 provided in the upper block 100. The pin member 130 protrudes from near the second liquid inlet 120 and is inserted into a coupling hole 326 provided in the second coater shim 320 so that the position of the second coater shim 320 is fixed.

Here, the pin member 130 and the coupling hole 326 may be designed such that a fixing position and a direction of the second coater shim 320 are consistently determined. Specifically, an installation direction should be consistently determined so that the second coater shim 320 receiving the inserted pin member 130 is prevented from being rotated. This may be achieved through design of a structure providing a plurality of pin members 130, a structure forming the pin member 130 and the coupling hole 326 in shapes excluding a circular cross section, or combining these structures. In addition, if necessary, a concave pin insertion hole 220 for accommodating the protruding pin member 130 may be provided in the lower block 200.

A screw through-hole 230 to access to the bottom surface of the second coater shim 320 is formed in the lower block 200, and an end portion of a bolt 232 screw-coupled to the screw through-hole 230 presses the second coater shim 320 so that the upper surface of the second coater shim 320 is more strongly pressed against the upper block 100.

In addition, in order to more effectively press the second coater shim 320 to the upper block 100, an expanded pressurizing block hole 240 is formed at an end portion of the screw through-hole 230 in a coupling direction of the screw through-hole 230 (a direction in which the bolt is tightened), and a pressurizing block 242 accommodated in the pressurizing block hole 240 is interposed between the bolt 232 and the second coater shim 320, and thus the second coater shim 320 can be pressurized more efficiently. For example, the pressurizing block 242 pressurizes portions of the both side walls 324 of the second coater shim 320, and thus the second coater shim 320 can be pressurized more efficiently.

In addition to the pressurizing structure prepared separately from the second coater shim 320, that is, the pressurizing force generated by mutual engagement of the upper block 100 and the lower block 200, due to an additional pressurizing force by which the bolt 232 pressurizes the second coater shim 320, a probability that the second liquid flowing through the second coater shim 320 is mixed with the first liquid around the second liquid becomes extremely low.

### [Second embodiment]

The second embodiment of the present invention is an embodiment suitable for a case in which a first liquid and a second liquid, for example, an electrode slurry and an insulation coating liquid, are applied onto a current collector provided in the form of a coil in two or more rows, and then a slitting process is performed.

That is, the second embodiment corresponds to an embodiment suitable for simultaneously coating the current collector with an active material to have a structure of "insulation coating liquid - electrode slurry - insulation coating liquid" in two or more rows.

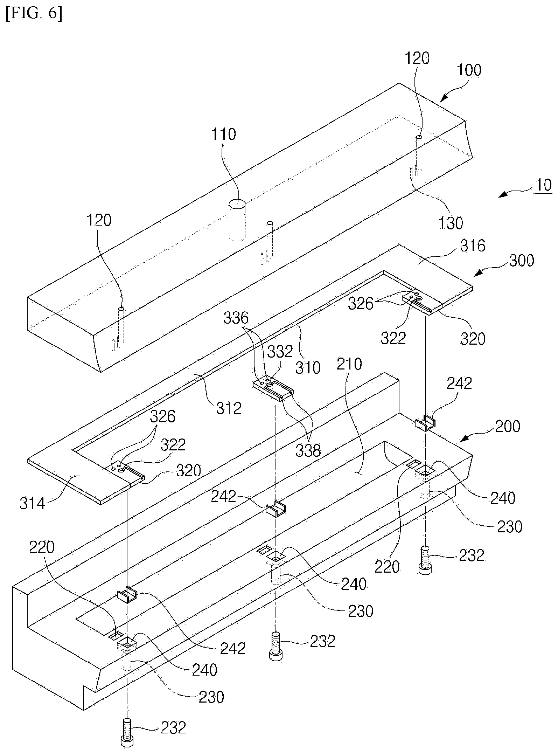

FIG. 6 is an exploded perspective view illustrating a die coater 10 according to another embodiment of the present invention, and the second embodiment includes the entire structure of the first embodiment and further includes a third coater shim 330. The third coater shim 330 is installed in the middle of the die coater 10 in the width direction and discharges the second liquid in two streams through a U-shaped flow path groove 332. That is, the third coater shim 330 is formed to discharge the second liquid in two streams corresponding to both second coater shims 320 disposed in close contact with the first and second guides 314 and 316.

In addition, the third coater shim 330 is disposed between the first and second guides 314 and 316 of the first coater shim 310. As the second coater shim 320 limits the actual width of the first slit 318, the third coater shim 330 also serves as a factor for limiting the first slit 318. Therefore, the third coater shim 330 disposed in the middle of the first slit 318 divides the first liquid into two liquids to discharge the first liquid in two rows in parallel. A height of the third coater shim 330 corresponds to the heights of the first and second coater shims 310 and 320.

Due to the arrangement of the third coater shim 330 and the two-row discharge structure of the second liquid, the coating structure of "second liquid - first liquid - second liquid" is formed on the current collector in two rows in parallel in a length direction of the current collector, and two current collector rolls may be obtained by performing a slitting process by which a portion between the two rows in parallel is cut.

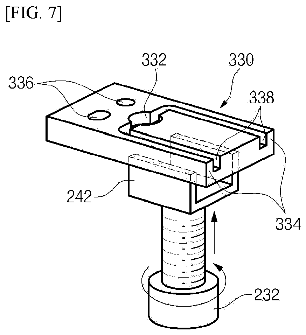

FIG. 7 is a perspective view illustrating the third coater shim 330 which has the same configuration as the second coater shim 320 except for the structure of the U-shaped flow path groove 332. Specifically, the third coater shim 330 is provided with the concave U-shaped flow path groove 332 which opens toward the upper block 100 and has a bottom surface. A closed end of the U-shaped flow path groove 332 is connected to the second liquid inlet 120 of the upper block 100, and two open ends of the U-shaped flow path groove 332 form third slits 338. Similarly, a coupling hole 336 is inserted into a pin member 130 so that a position of the third coater shim 330 is fixed and does not rotate.

Also, the same pressurizing structure as the second coater shim 320 may be applied onto the third coater shim 330, and a configuration and operation of the third coater shim 330 are the same as those described above. That is, a screw through-hole 230 to access to the bottom surface of the second coater shim 320 is formed in the lower block 200, and an end portion of a bolt 232 screw-coupled to the screw through-hole 230 pressurizes the third coater shim 330 such that the third coater shim 330 is in close contact with the upper block 100.

In addition, an expanded pressurizing block hole 240 is formed at an end portion of the screw through-hole 230 in a coupling direction, and a pressurizing block 242 accommodated in the pressurizing block hole 240 is interposed between the bolt 232 and the third coater shim 330, and thus the third coater shim 330 can be pressurized, for example, the pressurizing block 242 can pressurize portions of side walls 334 of the third coater shim 330.

Here, in the second embodiment, although it is described that the first liquid and the second liquid are simultaneously applied onto the electrode part in two rows in parallel by adding one third coater shim 330, it can be obviously understood by those skilled in the art that two or more third coater shims 330 may be added and thus the first liquid and the second liquid may be applied in three or more rows.

### [Description of Reference Numerals]

| | | | |
|---|---|---|---|
| 10: | die coater | 100: | upper block |
| 110: | first liquid inlet | 120: | second liquid inlet |
| 130: | pin member | 200: | lower block |
| 210: | manifold | 220: | pin insertion hole |
| 230: | screw through-hole | 232: | bolt |
| 240: | pressurizing block hole | 242: | pressurizing block |
| 300: | coater shim | 310: | first coater shim |
| 312: | base | 314: | first guide |
| 316: | second guide | 318: | first slit |
| 320: | second coater shim | 322: | flow path groove |
| 324: | sidewall | 326: | coupling hole |
| 328: | second slit | 330: | third coater shim |
| 332: | U-shaped flow path groove | 334: | sidewall |
| 336: | coupling hole | 338: | third slit |

### [Industrial Applicability]

The die coater of the present disclosure is useful for effectively and simultaneously coating the current collector for the secondary battery with two types of different liquids.

## Claims

1. A die coater (10) comprising:
an upper block (100) having a plurality of second liquid inlets (120);
a lower block (200) coupled to the upper block (100), wherein the lower block (200) includes a manifold (200) configured to accommodate a first liquid; and
a plurality of coater shims (300) interposed between the upper block (100) and the lower block (200) to form a first slit (318) and a second slit (328), wherein the first slit (318) and the second slit (328) are spaced apart from each other,
wherein the plurality of coater shims (300) include a first coater shim (310) and a second coater shim (320), wherein the first coater shim (310) includes the first slit (318) configured to discharge the first liquid accommodated in the manifold (200) and the second coater shim (320) includes the second slit (328) configured to discharge a second liquid supplied through an at least one of the plurality of second liquid inlets (120), and
wherein the first coater shim (310) and the second coater shim (320) have a same height, do not overlap vertically, and are disposed on a same surface between the upper block (100) and the lower block (200);
wherein a screw through-hole (230) is disposed in the lower block (200), so at to provide access to a bottom surface of the second coater shim (320); and
an end portion of a bolt screw coupled to the screw through-hole (230) is configured to pressurize the second coater shim (320), so as to bring the second coater shim (320) in close contact with the upper block (100).

2. The die coater of claim 1, wherein a width of the first slit (318) is determined by a width of the second coater shim (320).

3. The die coater (10) of claim 2, wherein:
a height of the first slit (318) is the same as the height of the first coater shim (310); and
a height of the second slit (328) is smaller than the height of the second coater shim (320).

4. The die coater (10) of claim 3, wherein:
the second coater shim (320) includes:
a recessed concave flow path groove disposed to face the upper block (100) and has a bottom surface;
a closed end of the recessed concave flow path groove being connected to the at least one of the plurality of the second liquid inlets (120) of the upper block (100); and
an open end of the recessed concave flow path groove that forms the second slit (328).

5. The die coater (10) of claim 4, wherein:
the first coater shim (310) includes a base (312) extending in a width direction and first and second guides (314, 316) protruding from both ends of the base (312), wherein the first guide (314) and the second guide (316) extend perpendicular to the width direction of the base (312); and
a pair of first side walls (324, 334) of the second coater shim (320) contact an inner wall of each of the first and second guides(314, 316),
wherein the pair of the first side walls (324) of the second coater shim (320) are disposed to face an exterior region of the die coater (10) in the width direction, and
wherein the inner wall of each of the first and second guides (314, 316) is disposed to face a central region of the die coater (10) in the width direction.

6. The die coater (10) of claim 5, wherein a distance between a pair of second side walls (334) of the second coater shim (320) determines a width of the first slit (318), wherein the pair of second sidewalls (334) of the second coater shim (320) are disposed to face the central region of the die coater (10) shim in the width direction;
wherein the pair of second sidewalls (334) of the second coater shim (320) are disposed closer to the central region than the inner walls of each of the first and second guides (314, 316).

7. The die coater (10) of any of the preceding claims, wherein:
an expanded pressurizing block hole (240) is disposed at an end portion of the screw through-hole (230) in a coupling direction, wherein the coupling direction is perpendicular to the width direction of the base (312); and
a pressurizing block (242) accommodated in the expanded pressurizing block hole (240) is interposed between the bolt (232) and the second coater shim (320), wherein the pressurizing block (242) is configured to pressurize the second coater shim (320).

8. The die coater (10) of claim 7, wherein the pressurizing block (242) is configured to pressurize portions of both side walls (324, 334) of the second coater shim (320).

9. The die coater (10) of claim 5, further comprising:
a third coater shim (330) disposed between each of the each of the first and second guides (314, 316),
wherein the third coater shim (330) includes:
a recessed concave U-shaped flow path groove (332) disposed to face the upper block (100) and has a bottom surface,
a closed end of the recessed U-shaped flow path groove (332) being connected to the at least one of the second liquid inlets (120) of the upper block (100),
two open ends of the recessed U-shaped flow path groove form third slits (338), and
wherein the third coater shim (330) has a height that is equal to the height of each of the first and second coater shims (310, 320).

10. The die coater (10) of claim 9, wherein:
a screw through-hole (230) is disposed in the lower block (200), so as to provide to access to a bottom surface of the third coater shim (330); and
an end portion of a bolt (232) screw-coupled to the screw through-hole (230) is configured to pressurize the third coater shim (330), so as to bring the third coater shim (330) in close contact with the upper block (100).

11. The die coater (10) of claim 10, wherein:
an expanded pressurizing block hole (240) is disposed at an end portion of the screw through-hole (230) in a coupling direction, wherein the coupling direction is perpendicular to the width direction of the base (312); and
a pressurizing block (242) accommodated in the expanded pressurizing block hole (240) is interposed between the bolt (232) and the third coater shim (330), wherein the pressurizing block (242) is configured to pressurize the third coater shim (330).

12. The die coater (10) of claim 11, wherein the pressurizing block (242) is configured to pressurizes portions of both side walls of the third coater shim (330).

## Patentansprüche

1. Düsenbeschichter (10), umfassend:
einen oberen Block (100), welcher eine Mehrzahl von zweiten Flüssigkeitseinlässen (120) aufweist;
einen unteren Block (200), welcher mit dem oberen Block (100) gekoppelt ist, wobei der untere Block (200) einen Verteiler (200) umfasst, welcher dazu eingerichtet ist, eine erste Flüssigkeit aufzunehmen; und
eine Mehrzahl von Beschichter-Abstandsstücken (300), welche zwischen dem oberen Block (100) und dem unteren Block (200) angeordnet sind, um einen ersten Schlitz (318) und einen zweiten Schlitz (328) zu bilden, wobei der erste Schlitz (318) und der zweite Schlitz (328) voneinander beabstandet sind,
wobei die Mehrzahl der Beschichter-Abstandsstücke (300) ein erstes Beschichter-Abstandsstück (310) und ein zweites Beschichter-Abstandsstück (320) umfasst, wobei das erste Beschichter-Abstandsstück (310) den ersten Schlitz (318) umfasst, welcher dazu eingerichtet ist, die erste Flüssigkeit,
welche in dem Verteiler (200) aufgenommen ist, abzulassen, und das zweite Beschichter-Abstandsstück (320) den zweiten Schlitz (328) umfasst, welcher dazu eingerichtet ist, eine zweite Flüssigkeit abzulassen, welche über wenigstens einen der Mehrzahl der zweiten Flüssigkeitseinlässe (120) zugeführt wird, und
wobei das erste Beschichter-Abstandsstück (310) und das zweite Beschichter-Abstandsstück (320) eine gleiche Höhe aufweisen, sich vertikal nicht überlappen und an einer gleichen Fläche zwischen dem oberen Block (100) und dem unteren Block (200) angeordnet sind;
wobei ein Schraubendurchgangsloch (230) in dem unteren Block (200) derart angeordnet ist, dass es einen Zugang zu einer unteren Fläche des zweiten Beschichter-Abstandsstücks (320) bereitstellt; und
wobei ein Endabschnitt einen Bolzen (232), welcher mit dem Schraubendurchgangsloch (230) schraubgekoppelt ist, dazu eingerichtet ist, das zweite Beschichter-Abstandsstück (320) derart mit Druck zu beaufschlagen, dass es das zweite Beschichter-Abstandsstück (320) in engen Kontakt mit dem oberen Block (100) bringt.

2. Düsenbeschichter nach Anspruch 1, wobei eine Breite des ersten Schlitzes (318) durch eine Breite des zweiten Beschichter-Abstandsstücks (320) bestimmt ist.

3. Düsenbeschichter (10) nach Anspruch 2, wobei:
eine Höhe des ersten Schlitzes (318) die Gleiche wie die Höhe des ersten Beschichter-Abstandsstücks (310) ist; und
eine Höhe des zweiten Schlitzes (328) kleiner ist als die Höhe des zweiten Beschichter-Abstandsstücks (320).

4. Düsenbeschichter (10) nach Anspruch 3, wobei:
das zweite Beschichter- Abstandsstück (320) umfasst:
eine vertiefte konkave Strömungspfadnut, welche derart angeordnet ist,
dass sie dem oberen Block (100) zugewandt ist und eine Bodenfläche aufweist;
wobei ein geschlossenes Ende der vertieften konkaven Strömungspfadnut mit wenigstens einem der Mehrzahl der zweiten Flüssigkeitseinlässe (120) des oberen Blocks (100) verbunden ist; und
wobei ein offenes Ende der vertieften konkaven Strömungspfadnut den zweiten Schlitz (328) bildet.

5. Düsenbeschichter (10) nach Anspruch 4, wobei:
das erste Beschichter-Abstandsstück (310) eine Basis (312), welche sich in einer Breitenrichtung erstreckt und eine erste und eine zweite Führung (314, 316) umfasst, welche von beiden Enden der Basis (312) hervorstehen, wobei sich die erste Führung (314) und die zweite Führung (316) senkrecht zu der Breitenrichtung der Basis (312) erstrecken; und
ein Paar von ersten Seitenwänden (324, 334) des zweiten Beschichter-Abstandsstücks (320) eine Innenwand jede der ersten und der zweiten Führung (314, 316) kontaktiert,
wobei das Paar der ersten Seitenwände (324) des zweiten Beschichter-Abstandsstücks (320) derart angeordnet ist, dass es in der Breitenrichtung einer äußeren Region des Düsenbeschichters (10) zugewandt ist, und
wobei die Innenwand jeder der ersten und der zweiten Führung (314, 316) derart angeordnet ist, dass sie in der Breitenrichtung einer zentralen Region des Düsenbeschichters (10) zugewandt ist.

6. Düsenbeschichter (10) nach Anspruch 5, wobei ein Abstand zwischen einem Paar von zweiten Seitenwänden (334) des zweiten Beschichter-Abstandsstücks (320) eine Breite des ersten Schlitzes (318) bestimmt, wobei das Paar von zweiten Seitenwänden (334) des zweiten Beschichter-Abstandsstücks (320) derart angeordnet ist, dass es in der Breitenrichtung der zentralen Region des Düsenbeschichter - (10) - Ausgangsblechs zugewandt ist;
wobei das Paar von zweiten Seitenwänden (334) des zweiten Beschichter-Abstandsstücks (320) näher an der zentralen Region angeordnet ist als die Innenwände jeder der ersten und der zweiten Führung (314, 316).

7. Düsenbeschichter (10) nach einem der vorhergehenden Ansprüche, wobei:
ein erweitertes Druckbeaufschlagungsblockloch (240) an einem Endabschnitt des Schraubendurchgangslochs (230) in einer Kopplungsrichtung angeordnet ist, wobei die Kopplungsrichtung senkrecht zu der Breitenrichtung der Basis (312) verläuft; und
ein Druckbeaufschlagungsblock (242), welcher in dem erweiterten Druckbeaufschlagungsblockloch (240) aufgenommen ist, zwischen dem Bolzen (232) und dem zweiten Beschichter-Abstandsstück (320) eingefügt ist,
wobei der Druckbeaufschlagungsblock (242) dazu eingerichtet ist, das zweite Beschichter-Abstandsstück (320) mit Druck zu beaufschlagen.

8. Düsenbeschichter (10) nach Anspruch 7, wobei der Druckbeaufschlagungsblock (242) dazu eingerichtet ist, Abschnitte von beiden Seitenwänden (324, 334) des zweiten Beschichter-Abstandsstücks (320) mit Druck zu beaufschlagen.

9. Düsenbeschichter (10) nach Anspruch 5, ferner umfassend:
ein drittes Beschichter-Abstandsstück (330), welches zwischen jeder der ersten und der zweiten Führung (314, 316) angeordnet ist,
wobei das dritte Beschichter-Abstandsstück (330) umfasst:
eine vertiefte konkave U-förmige Strömungspfadnut (332), welche derart angeordnet ist, dass sie dem oberen Block (100) zugewandt ist und eine untere Fläche aufweist,
wobei ein geschlossenes Ende der vertieften U-förmige Strömungspfadnut (332) mit dem wenigstens einen der zweiten Flüssigkeitseinlässe (120) des oberen Blocks (100) verbunden ist,
wobei zwei offene Enden der vertieften U-förmige Strömungspfadnut dritte Schlitze (338) bilden, und
wobei das dritte Beschichter- Abstandsstück (330) eine Höhe aufweist, welche gleich der Höhe jedes des ersten und des zweiten Beschichter- Abstandsstücks (310, 320) ist.

10. Düsenbeschichter (10) nach Anspruch 9, wobei:
ein Schraubendurchgangsloch (230) in dem unteren Block (200) derart angeordnet ist, dass es einen Zugang zu einer unteren Fläche des dritten Beschichter- Abstandsstücks (330) bereitstellt; und
ein Endabschnitt eines Bolzens (232), welcher mit dem Schraubendurchgangsloch (230) schraubgekoppelt ist, dazu eingerichtet ist, das dritte Beschichter-Abstandsstück (330) derart mit Druck zu beaufschlagen, dass es das dritte Beschichter-Abstandsstück (330) in engen Kontakt mit dem oberen Block (100) bringt.

11. Düsenbeschichter (10) nach Anspruch 10, wobei:
ein erweitertes Druckbeaufschlagungsblockloch (240) an einem Endabschnitt des Schraubendurchgangslochs (230) in einer Kopplungsrichtung angeordnet ist, wobei die Kopplungsrichtung senkrecht zu der Breitenrichtung der Basis (312) verläuft; und
ein Druckbeaufschlagungsblock (242), welcher in dem erweiterten Druckbeaufschlagungsblockloch (240) aufgenommen ist, zwischen dem Bolzen (232) und dem dritten Beschichter-Abstandsstück (330) eingefügt ist,
wobei der Druckbeaufschlagungsblock (242) dazu eingerichtet ist, das dritte Beschichter-Abstandsstück (330) mit Druck zu beaufschlagen.

12. Düsenbeschichter (10) nach Anspruch 11, wobei der Druckbeaufschlagungsblock (242) dazu eingerichtet ist, Abschnitte von beiden Seitenwänden des dritten Beschichter-Abstandsstücks (330) mit Druck zu beaufschlagen.

## Revendications

1. Machine à enduire (10) comprenant :
un bloc supérieur (100) présentant une pluralité de secondes entrées de liquide (120) ;
un bloc inférieur (200) couplé au bloc supérieur (100), dans lequel le bloc inférieur (200) inclut un répartiteur (200) configuré pour accueillir un premier liquide ; et
une pluralité de cales pour machine à enduire (300) interposées entre le bloc supérieur (100) et le bloc inférieur (200), de manière à former une première fente (318) et une seconde fente (328), dans lequel la première fente (318) et la seconde fente (328) sont espacées l'une de l'autre,
dans lequel la pluralité de cales pour machine à enduire (300) inclut une première cale pour machine à enduire (310) et une deuxième cale pour machine à enduire (320), dans lequel la première cale pour machine à enduire (310) inclut la première fente (318) configurée pour évacuer le premier liquide logé dans le répartiteur (200) et la deuxième cale (320) inclut la seconde fente (328) configurée pour évacuer un second liquide fourni via au moins une de la pluralité de secondes entrées de liquide (120), et
dans lequel la première cale pour machine à enduire (310) et la deuxième cale pour machine à enduire (320) présentent une même hauteur, ne se chevauchent pas verticalement, et sont disposées sur une même surface entre le bloc supérieur (100) et le bloc inférieur (200) ;
dans lequel un trou traversant de vis (230) est disposé dans le bloc inférieur (200), de manière à fournir un accès à une surface inférieure de la deuxième cale pour machine à enduire (320) ; et
une partie d'extrémité d'une vis de boulon couplée au trou traversant de vis (230) est configurée pour appliquer une pression sur la deuxième cale pour machine à enduire (320), de manière à mettre la deuxième cale pour machine à enduire (320) en contact étroit avec le bloc supérieur (100).

2. Machine à enduire selon la revendication 1, dans lequel une largeur de la première fente (318) est déterminée par une largeur de la deuxième cale pour machine à enduire (320).

3. Machine à enduire (10) selon la revendication 2, dans lequel :
une hauteur de la première fente (318) est la même que la hauteur de la première cale pour machine à enduire (310) ; et
une hauteur de la seconde fente (328) est inférieure à la hauteur de la deuxième cale pour machine à enduire (320).

4. Machine à enduire (10) selon la revendication 3, dans lequel :
la deuxième cale pour machine à enduire (320) inclut :
une rainure de trajet d'écoulement concave en creux disposée en regard du bloc supérieur (100) et présentant une surface inférieure ;
une extrémité fermée de la rainure de trajet d'écoulement concave en creux étant reliée à l'au moins l'une de la pluralité de secondes entrées de liquide (120) du bloc supérieur (100) ; et
une extrémité ouverte de la rainure de trajet d'écoulement concave en creux qui forme la seconde fente (328).

5. Machine à enduire (10) selon la revendication 4, dans lequel :
la première cale pour machine à enduire (310) inclut une base (312) s'étendant dans une direction de largeur et des premier et second guides (314, 316) faisant saillie des deux extrémités de la base (312), dans lequel le premier guide (314) et le second guide (316) s'étendent perpendiculairement à la direction de largeur de la base (312) ; et
une paire de premières parois latérales (324, 334) de la deuxième cale pour machine à enduire (320) sont en contact avec une paroi interne de chacun des premier et second guides (314, 316),
dans lequel la paire des premières parois latérales (324) de la deuxième cale pour machine à enduire (320) sont disposées en regard d'une région extérieure de la machine à enduire (10) dans la direction de largeur, et
dans lequel la paroi interne de chacun des premier et second guides (314, 316) est disposée en regard d'une région centrale de la machine à enduire (10) dans la direction de largeur.

6. Machine à enduire (10) selon la revendication 5, dans lequel une distance entre une paire de secondes parois latérales (334) de la deuxième cale pour machine à enduire (320) détermine une largeur de la première fente (318), dans lequel la paire de secondes parois latérales (334) de la deuxième cale pour machine à enduire (320) sont disposées en regard de la région centrale de la cale pour machine à enduire (10) dans la direction de largeur ;
dans lequel la paire de secondes parois latérales (334) de la deuxième cale pour machine à enduire (320) sont disposées plus près de la région centrale que les parois intérieures de chacun des premier et second guides (314, 316).

7. Machine à enduire (10) selon l'une quelconque des revendications précédentes, dans lequel :
un trou de bloc de mise sous pression élargi (240) est disposé au niveau d'une partie d'extrémité du trou traversant de vis (230) dans une direction de couplage, dans lequel la direction de couplage est perpendiculaire à la direction de largeur de la base (312) ;
et
un bloc de mise sous pression (242) disposé dans le trou de bloc de mise sous pression élargi (240) est interposé entre le boulon (232) et la deuxième cale pour machine à enduire (320), dans lequel le bloc de mise sous pression (242) est configuré pour pressuriser la deuxième cale pour machine à enduire (320).

8. Machine à enduire (10) selon la revendication 7, dans lequel le bloc de mise sous pression (242) est configuré pour appliquer une pression sur des parties des deux parois latérales (324, 334) de la deuxième cale pour machine à enduire (320).

9. Machine à enduire (10) selon la revendication 5, comprenant en outre :
une troisième cale pour machine à enduire (330) disposée entre chacun des premier et second guides (314, 316),
dans lequel la troisième cale pour machine à enduire (330) inclut :
une rainure de trajet d'écoulement en forme de U concave en creux (332) disposée en regard du bloc supérieur (100) et présentant une surface inférieure,
une extrémité fermée de la rainure de trajet d'écoulement en forme de U en creux (332) étant reliée à l'au moins une des secondes entrées de liquide (120) du bloc supérieur (100),
deux extrémités ouvertes de la rainure de trajet d'écoulement en forme de U en creux forment des troisièmes fentes (338), et
dans lequel la troisième cale pour machine à enduire (330) présente une hauteur qui est égale à la hauteur de chacune des première et deuxième cales pour machine à enduire (310, 320).

10. Machine à enduire (10) selon la revendication 9, dans lequel :
un trou traversant de vis (230) est disposé dans le bloc inférieur (200), de manière à permettre l'accès à une surface inférieure de la troisième cale pour machine à enduire (330) ; et
une portion d'extrémité d'un boulon (232) couplé par vis au trou traversant de vis (230) est configurée pour appliquer une pression sur la troisième cale pour machine à enduire (330), de manière à mettre la troisième cale pour machine à enduire (330) en contact étroit avec le bloc supérieur (100).

11. Machine à enduire (10) selon la revendication 10, dans lequel :
un trou de bloc de mise sous pression élargi (240) est disposé au niveau d'une portion d'extrémité du trou traversant de vis (230) dans une direction de couplage, dans lequel la direction de couplage est perpendiculaire à la direction de largeur de la base (312) ;
et
un bloc de mise sous pression (242) logé dans le trou de bloc de mise sous pression élargi (240) est interposé entre le boulon (232) et la troisième cale pour machine à enduire (330), dans lequel le bloc de mise sous pression (242) est configuré pour appliquer une pression sur la troisième cale pour machine à enduire (330).

12. Machine à enduire (10) selon la revendication 11, dans lequel le bloc de mise sous pression (242) est configuré pour appliquer une pression sur des parties des deux parois latérales de la troisième cale pour machine à enduire (330).
